# EUROPEAN PATENT SPECIFICATION

(11) **EP 3 260 970 B1**
(45) Date of publication and mention of the grant of the patent: **10.03.2021**
(21) Application number: 17186215.4
(22) Date of filing: 20.01.2011
(51) Int. Cl.: G06F 3/0488, G06F 1/16, G06F 3/0489

(54) **THREE-DIMENSIONAL, MULTI-DEPTH PRESENTATION OF ICONS IN ASSOCIATION WITH DIFFERING INPUT COMPONENTS OF A USER INTERFACE**
DREIDIMENSIONALE, MULTITIEFENDARSTELLUNG VON IKONEN IM ZUSAMMENHANG MIT UNTERSCHIEDLICHEN EINGABEKOMPONENTEN EINER BENUTZERSCHNITTSTELLE
PRÉSENTATION TRIDIMENSIONNELLE À PROFONDEURS MULTIPLES D'ICÔNES EN ASSOCIATION AVEC DIFFÉRENTS COMPOSANTS D'ENTRÉE D'UNE INTERFACE UTILISATEUR

(43) Date of publication of application: 27.12.2017
(62) Divisional of application: 11703310.0
(73) Proprietor: BlackBerry Limited, Waterloo, ON N2K 0A7 (CA)
(72) Inventor: DeLuca, Michael Joseph, Boca Raton, FL 33432 (US); Hirsch, Alexander Samson, Highland Park, IL 60035 (US)
(74) Representative: Hanna Moore + Curley

(56) References cited:
- GB-A- 2 451 952
- US-A1- 2010 064 212
- US-A1- 2010 277 420

## Description

### Technical Field

This disclosed concept relates generally to the presentation of icons associated with a user interface and more particularly to the use of three-dimensional displays in these regards.

### Background

Portable electronic devices (such as mobile-communications devices, cellular telephony devices, pad and tablet-based computers, personal digital assistants, and so forth) typically provide a user interface to permit selection of a desired functionality and interaction in other ways with the device and its applications. As various devices become ever more capable, and as the device users themselves expect an ever-increasing number of capabilities from their devices, it is not unusual for a device to include a user interface with more than one input component or for a device to include more than one user interface.

As one example in these regards, a device may have a first user interface (such as a first touch-screen display on a first side of the device) and a second user interface (such as a second touch-screen display) on a second side of the device. This approach typically requires the device user to rotate their device 180 degrees in order to view and access the different user interfaces on the various sides of the device. Alternatively, the device user may memorize what user inputs are available on the hidden side of their device.

As another example in these regards, a device may have a user interface with more than one input component. For example, a device may have a first input component (such as a touch-screen display) on a first side of the device and one or more physical buttons, switches, touchpads, or the like on a second side of the device. As a yet further example in these regards, a device may have a user interface that makes use of user inputs on opposite sides of the device (such as the front and back of the device), where the user inputs may be part of a user interface that coordinates the inputs from the various user inputs.

US 2010/0277420 A1 discloses a hand-held electronic device with a display module that comprises a plurality of distinct display layers arranged as a stack of display layers. Moreover, the electronic device comprises a primary side touch-sensitive interface layer, and a secondary side touch-sensitive interface layer. The primary and secondary side touch-sensitive interface layers are each overlappingly arranged with respect to the plurality of display layers, and adapted to receiving and detecting respective touch interactions at the front and back side surfaces of the electronic device. In one embodiment, multiple stacked objects are displayed by the stack of display layers, and the particular touch-sensitive surface with which the user interacts is used to differentiate which one of the multiple stacked objects the user is interacting with. For example, the stack of objects may include individual display elements arranged in a particular order, where interacting with the back of the device selects and manipulates items from the bottom of the stack, and interacting with the front of the device selects and manipulates items from the top of the stack.

US 2010/0064212 A1 describes a consumer electronic device that includes a monolithic housing. A display is positioned on a first face of the housing and displays graphics to the user. An input interface accepts user input and is positioned on the opposing back face of the housing. The display and the interface are oriented in opposing directions, and the display overlays an image of the input interface over the displayed graphics to allow a user to view which keys the user presses.

GB 2451952 A describes a touch-based user interface for an electronic device, including a housing including electronic circuitry, a plurality of buttons mounted within a first area on a first side of the housing, and a screen mounted on a second area of a second side of the housing, the second side being opposite to the first side, and the second area being opposite to at least a portion of the first area, wherein the electronic circuitry is operative (i) to display on the screen at least one user interface control element that corresponds respectively to at least one button, each such user interface control element having a command associated therewith, and (ii) to perform the command associated with a designated user interface control element when its corresponding button is pressed.

### Summary

In first and second aspects of the present invention there are provided a method and apparatus according to claims 1 and 6, respectively. In a third aspect of the present invention there is provided a computer readable storage medium according claim 14.

### Brief Description of the Drawings

FIG. 1 comprises a flow diagram as configured in accordance with various embodiments of the disclosed concept;
FIG. 2 comprises a perspective schematic view as configured in accordance with various embodiments of the disclosed concept;
FIG. 3 comprises a front and back elevational schematic view as configured in accordance with various embodiments of the disclosed concept;
FIG. 4 comprises a back elevational schematic view as configured in accordance with various embodiments of the disclosed concept;
FIG. 5 comprises a perspective schematic detail view as configured in accordance with various embodiments of the disclosed concept;
FIG. 6 comprises a side elevational schematic view as configured in accordance with various embodiments of the disclosed concept;
FIG. 7 comprises a front elevational schematic view as configured in accordance with various embodiments of the disclosed concept;
FIG. 8 comprises a perspective block diagram view as configured in accordance with various embodiments of the disclosed concept; and
FIG. 9 comprises a block diagram view as configured in accordance with various embodiments of the disclosed concept.

Elements in the figures are illustrated for simplicity and clarity and have not necessarily been drawn to scale. For example, the dimensions, relative positioning, or both of some of the elements in the figures may be exaggerated relative to other elements to help to improve understanding of various embodiments of the disclosed concept. Also, common but well-understood elements that are useful in a commercially feasible embodiment may be omitted from the figures in order to facilitate a less obstructed view of these various embodiments of the disclosed concept.

### Detailed Description

The present disclosure describes a user interface that employs a three- dimensional display. In this disclosure, a three-dimensional display is any display apparatus capable of conveying a stereoscopic perception of three-dimensional (3D) depth to a viewer, and may hereafter be referred to as a "display" or "stereoscopic display" for the sake of brevity. It should be understood that a three-dimensional display according to the present invention utilizes dual two dimensionally (2D) displayed images (one for each of the viewer's left and right eye) to create a virtual three-dimensional image. The generation of a virtual three-dimensional image or icon using a 3D display is referred to as "presenting" the image because the image is perceived by the viewer to appear at various distances from the viewer without regard to the physical location of the 3D display apparatus. In this disclosure, "presenting" refers to the use of a three-dimensional display to cause the display of one or more components of an image, such the displayed components create the appearance of a single image perceived by an observer. An image presented at a specific depth of presentation may comprise multiple components of the image that may be mentally combined by the observer to create the appearance of a single image at a depth of presentation (e.g., at a perceived distance) from the observer.

The three-dimensional display serves to present a plurality of icons that are associated with a user interface of the corresponding electronic device. The plurality of icons includes at least a first icon presented at a first depth of presentation and a second icon presented at a second, different depth of presentation. The first icon at the first depth of presentation is associated with a first input component of the user interface and the second icon is associated with a second, different input component of the user interface. The first input component provides for interaction with the first icon presented at the first depth of presentation, and the second input component provides for interaction with the second icon presented at the second depth of presentation.

In this disclosure, an icon that is available for interaction by a particular input component of a user interface is one that can be selected to invoke a corresponding program, process, application, function, capability, media file, Internet address, personal information management (PIM) record, or the like. An icon that is unavailable for interaction by the input component is said to be presently unavailable for selection, even though the icon may be presented via the 3D display. In other words, an icon is presented to a viewer (for example, to make the viewer aware of its presence), and is either available or unavailable for selection by interacting with a particular input component. By one approach, the icon that is unavailable for interaction with a particular input component may be presented in a disabled, incapacitated, or inoperative state. It should be understood that an icon that is unavailable for interaction with a first input component may still be available for interaction with a second input component.

Furthermore, certain types of input components may be capable of providing interaction with more than one depth of presentation. For example, a touch-sensitive surface may provide for interaction at a depth of presentation just above the surface by detecting a light touch, single tap, or mere proximity to a "touchless" touch-screen. The same touch-sensitive surface may provide for interaction with an icon at the same depth of presentation that coincides with the surface of the touch-sensitive surface, by detecting, for example, a forceful touch, double tap, or physical contact with the touch-sensitive surface.

It should also be understood that a user interface may disable, restrain, ignore, treat, or otherwise make icons presented at a particular depth of presentation that is unavailable for interaction with a particular input component of the user interface. By one approach, the user interface may refrain from responding to a detected input associated with a disabled or unavailable icon (e.g., unavailable for interaction by an input component) at the input component. Icons that are presented at the unavailable depth of presentation may be considered unavailable by virtue of the type of input component. For example, where the input component is a touch-sensitive surface of the electronic devices, icons that are presented at the depth of presentation associated with the touch-sensitive surface are available for selection by detecting a touch on the touch- sensitive service (e.g., touching the surface at a location where the icon is presented). Icons presented above or below the touch-sensitive surface may be said to be made unavailable, disabled, or treated as unavailable due to the inability to detect a touch associated with the icon.

In many examples provided in this disclosure, either or both of the first input component and the second input component may comprise touch-sensitive surfaces. Alternatively, each input component may be a touch-sensitive display, a mouse, a touchpad, a track pad, an electronic pen, a user interface glove, or other input component configured to allow interaction with icons presented at a depth of presentation associated with the input component. These examples are illustrative only, and examples in which the first and second input components are not disposed on respective first and second opposing surfaces of the electronic device and the second input component is not three-dimensionally shaped do not fall within the scope of the present invention as defined by the claims. For example, the first depth of presentation may be perceived to be associated with a selection capability of the first input component, while a second, different depth of presentation may be perceived to be unassociated with the selection capability of the first input component, and vice versa.

According to the present invention, the aforementioned first depth of presentation substantially coincides with a first control surface (such as a touch-sensitive display as a first input component of the user interface) of the corresponding electronic device. So configured, the first icon (which is available for interaction by the first input component) appears at a depth of presentation that coincides with that first control surface. This may be done by presenting the left and right eye image for the first icon at substantially a same location on the three-dimensional display, or by presenting left and right eye images that are substantially identical to each other. This approach can facilitate use of the touch- sensitive display when selecting a particular icon that is presented in substantial coincidence with the touch-sensitive display.

In turn, the aforementioned second depth of presentation substantially coincides with a second control surface (such as one or more tactilely-distinctive areas) located on a different side of the electronic device from the aforementioned first control surface. So configured, the second icon (which is available for interaction by the second input component) appears at a depth of presentation that coincides with the second control surface of the electronic device. For example, the second control surface is located on a side of the electronic device that is opposite from the first control surface. This approach facilitates use of both control surfaces of the electronic device as part of a user interface, even though one of the control surfaces is physically hidden from view but represented by the three-dimensional presentation of the icons at the second depth of presentation. In these regards, some icons are presented at a depth that is perceived to be below the display (i.e., at a depth of perception that is associated with the second control surface of the electronic device). This is done by presenting differing left and right eye images for such icons (e.g. at slightly offset locations) on the three-dimensional display to create the perception of icons at depths below the display. Icons that are presented at a depth of presentation associated with the second control surface are available for interaction by the second input component, and unavailable for interaction by the first input component.

Such an approach greatly improves the overall usability of an electronic device and also the speed and convenience by which a device user can utilize and leverage the full capabilities of the device. Furthermore, the disclosed concept may prevent inadvertent assertion of at least some of the icons by limiting selection capability of each input component to, for example, only icons presented at a depth of presentation associated with each input component. When the icons that are available for interaction are perceived to be associated with a selection capability of a particular input component or are perceived to coincide in space with the selection capability of the particular input component, the overall effect is highly intuitive and ergonomically sensible. This is particularly useful when an input component may otherwise be directly hidden from view and the three-dimensional presentation of the icons provide a visual cue for the location of the input component.

Those skilled in the art will appreciate that these teachings can be implemented in a variety of commercially viable ways. It will further be appreciated that these teachings are highly scalable and can be used with a variety of differently-sized user interfaces, icons, electronic devices, and so forth. These and other benefits may become clearer upon making a thorough review and study of the following detailed description.

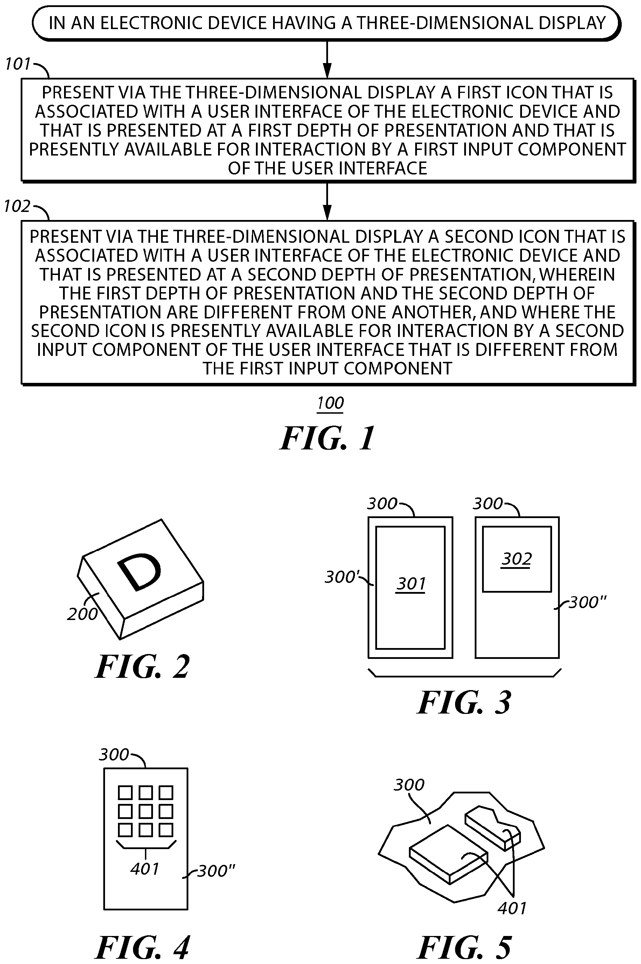

Referring now to the drawings, and in particular to FIG. 1, an illustrative process 100 that is compatible with many of these teachings will be described.

In this illustrative example, an electronic device carries out the described process 100. Electronic devices referred to in this disclosure may include, for example, portable electronic devices, simple cellular telephones, smart telephones, wireless personal digital assistants (PDAs), laptop computers, tablets, portable gaming devices, televisions, monitors, or other electronic devices. In accordance with the present invention, this electronic device has at least one three-dimensional display which is stereoscopic.

The expression "three-dimensional display" may refer to a physically two-dimensional active display (such as a liquid-crystal display or a light-emitting diode display) that is capable of portraying a virtual three-dimensional image (either alone or in conjunction with, for example, special lenses through which the viewer gazes at the display). A three-dimensional display comprising a stereoscopic display can present offset images that are displayed separately to the left and right eye. Both of these 2-D offset images are then mentally perceived by the viewer as a single 3-D image.
Examples of this technology include anaglyph images and polarized glasses. Autostereoscopic display technologies may use optical components in the display, rather than spectacles worn by the viewer, to enable each eye to see a different image. In another example, a three-dimensional display comprising a holographic display may utilize interference of coherent light to create a light field identical to that which would emanate from an image at a particular depth of perception. Still further examples of technologies suitable for three-dimensional displays, which however are not covered by the claims, may include volumetric displays, lenticular displays, or free-space displays.

Various three-dimensional displays are known in the art and other approaches will likely be developed going forward. It should be understood that three- dimensional stereoscopic displays in accordance with the present invention are capable of conveying the appearance of an icon at various depths of perception. As the present teachings are not particularly sensitive to any specific choices in these regards, further elaboration here will not be provided for the sake of brevity.

This electronic device further comprises a user interface having at least a first input component and a second, different input component. By one approach, this first input component and the three-dimensional display can comprise an integrated component (where, for example, the integrated component comprises, at least in part, a touch-sensitive display located on a front surface of the electronic device).

At step 101 this process 100 provides for presenting, via the aforementioned three-dimensional display, a plurality of icons. The plurality of icons is associated with the aforementioned user interface that corresponds to the electronic device. Icons each serve to represent a corresponding program, process, application, function, capability, media file, Internet address, personal information management (PIM) record, or the like. In many cases a plurality of such icons are displayed using, for example a touch-sensitive display. At least under some circumstances an icon is selectable based on an interaction with the user interface (with, for example, an input component of the user interface). For the sake of illustration and not by way of limitation, a particular icon may be associated with any of a variety of applications (i.e., so-called "apps").

At least some of these icons comprise two- dimensional images. In examples not covered by the claims, however, and continuing to presume upon the capabilities of the three-dimensional display, one or more of these icons can themselves comprise a three-dimensional image. Referring momentarily to FIG. 2, a simple illustrative example in these regards comprises a virtual three-dimensional button 200 that presents a corresponding icon (here, the alphabetic character "D").

Returning again to FIG. 1, at step 101 this presentation of icons includes presenting at least a first icon and a second icon where these icons are presented at differing depths of presentation. That is, to a viewer of the display who is able to discern the three-dimensional content thereof, one of these depths of presentation will appear, for example, to be closer to the viewer than the other. Further elaboration in these regards appears below.

In this illustrative example, and notwithstanding the different depths of presentation, both the first and second icon are available for interaction in the user interface, albeit for potentially separate input components of the user interface. (As used herein, "interaction" shall be understood to comprise asserting or identifying an icon in order to activate (or return to) a corresponding capability as a direct consequence and result of having so chosen or identifying that icon.) In particular, the first icon (which is presented at the first depth of presentation) is presently available for interaction by the aforementioned first input component of the user interface. The second icon, in turn, is presently available for interaction by the aforementioned second input component of the user interface. While the first icon is available for interaction by the first input component, it is unavailable for interaction by the second input component, and vice versa.

As suggested earlier, these first and second input components are located on opposing sides of the electronic device. FIG. 3 offers a simple example in these regards. Here, the front side 300' of the electronic device 300 has a three- dimensional display 301 that also comprises a touch-sensitive display to serve as the first input component. The back side 300" of the electronic device 300, in turn, in accordance with an implementation not covered by the claims, has a touch- sensitive surface 302 that may also comprise a two-dimensional display. (It will be understood that the specifics of this example are intended to serve only in an illustrative example and are not intended to suggest any particular limitations in these regards. For example, though the display 302 on the back side 300" of the electronic device 300 is shown as being only half the size of the display 301 on the front side 300' of the electronic device 300, essentially any other proportionality of choice could be utilized as desired. It should be understood that labels for "front side" and "back side" of a device as used in this disclosure are meant to refer interchangeably to opposing sides of an electronic device.)

The second input component on the backside 300' of the electronic device 300 comprises other than a touch-sensitive surface. As a simple, illustrative example in these in accordance with the present invention and again without intending any limitations by way of this example, FIG. 4 depicts an alternative of the back side 300" wherein the second input component comprises, at least in part, a keypad 401. So configured, the second input component comprises a plurality of tactilely-distinctive areas. As one example in these regards, and referring momentarily to FIG. 5, each of the keys of the keypad 401 can comprise a raised keycap that is generally haptically discernable by the fingers of a device user. It should be understood that other types of input components can be conceivably used on the back side 300" of the device, such as would be readily apparent to those of skill in the art.

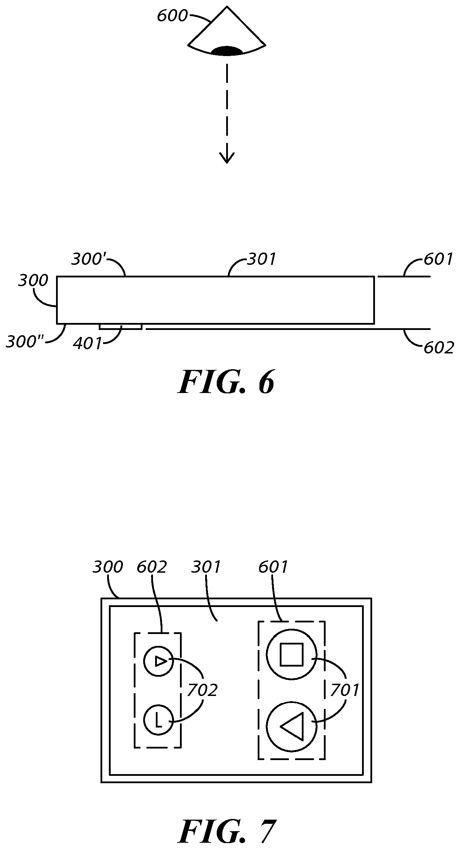

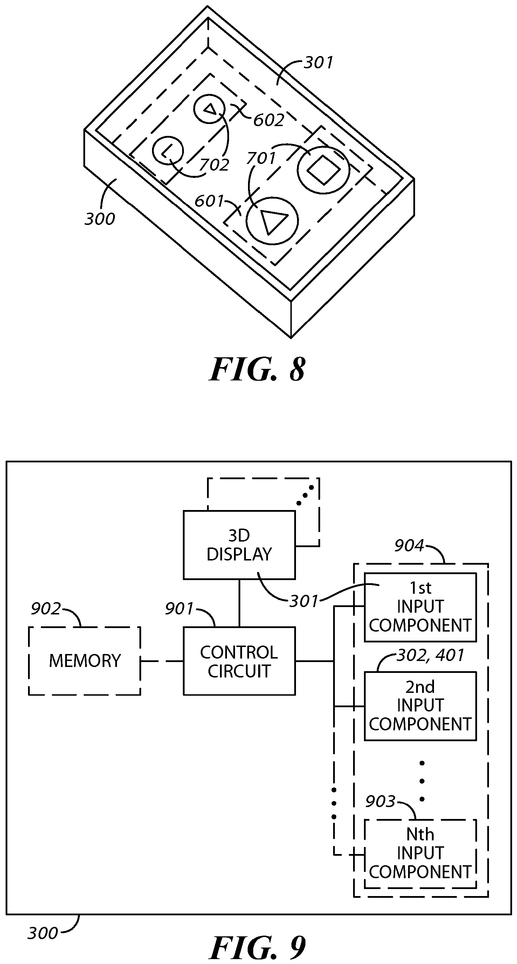

FIG. 6 provides a side view of such an electronic device 300 having a touch-sensitive display 301 (that also provides the aforementioned three-dimensional presentations of icons) on one side of the device 300 and a keypad 401 on an opposing side of the electronic device 300. In this example, and from the point of view of an observing viewer 600, the aforementioned first depth of presentation 601 is substantially coplanar with the touch-sensitive display 301 and the second depth of presentation 602 is substantially coplanar with the keypad 401. Accordingly, and referring now to FIGS. 7 and 8, icons 701 presented at that first depth of presentation 601 substantially coincide with the control surface of the touch-sensitive display 301.
Similarly, icons 702 presented at the second depth of presentation 602 substantially coincide with the control surface of the keypad 401 (in this case, one or more of the keys of the keypad 401).

Because the first depth of presentation 601 is closer to the observing viewer 600 than the second depth of presentation 602, the icons 701 displayed at the first depth of presentation 601 will typically appear to be larger than the icons 702 displayed at the second depth of presentation 602 in keeping with the perspective that would prevail if the device 300 were in fact transparent and the observing viewer 600 were able to actually see such icons physically disposed on or in conjunction with the keypad 401.

By one approach this difference in size can reflect the actual geometry and form factor of the device. If desired, however, this difference in size can be exaggerated to make it easier to visually distinguish the icons that are associated with the input component on the front surface from the icons that are associated with the input component on the backside of the electronic device 300.

It will be understood that the displayed icons can be laterally offset from one another as desired. For example, by one approach, the icons appearing at differing depths of presentation can be substantially coincident such that they appear to be layered, offset, or even stacked one above the other. In such a case it may be useful to present at least the higher-level icons in a transparent or translucent manner to permit lower-level icons to be readily perceivable by the observing viewer. As another example, and again as desired, the icons appearing at differing depths of presentation can be laterally offset from one another to avoid having icons at higher levels occluding part or all of the icons that appear at lower depths of presentation.

Those skilled in the art will recognize and understand that there are no particular limitations in these regards as to how many icons are presented. These teachings will also accommodate providing more than one cluster of grouped icons at a given, shared depth of presentation if desired. For example, a first group of three icons could be presented at one portion of any of the depicted depths of presentation and a second group of icons could also be presented at a different, removed portion of that same depth of presentation.

In the illustrative examples described above the icons are all available for interaction by a particular input component of a user interface, albeit with at least one icon pertaining to a first input component associated with a first depth of presentation while at least another such icon pertains to second input component associated with another depth of presentation. These teachings will also optionally accommodate, if desired, also presenting (for example, at yet other depths of presentation) other icons that are not available for interaction by any input component. Various aspects in these regards include the use of additional depths of presentation and moving icons from one depth of presentation to another.

The above-described processes are readily enabled using any of a wide variety of available, readily-configured platforms, including partially or wholly programmable platforms as are known in the art or dedicated purpose platforms as may be desired for some applications. Referring now to FIG. 9, an illustrative approach to such a platform will now be described.

In this illustrative example the electronic device 300 comprises a portable electronic device. As explained above, however, any number of devices can readily serve in these same regards as desired. This electronic device 300 comprises, at least in part, a control circuit 901 that operably couples to one or more three-dimensional displays 301. The electronic device 300 also comprises a user interface 904 with two or more input components. By one approach this can include a first input component comprising a touch-sensitive capability that comprises a part of one or more of the aforementioned three-dimensional displays 301. A second input component of the user interface can comprise any of a variety of modalities of interaction as desired. For example, in addition to the touch-sensitive display 302 or key-based approaches 401 described above, this input component may comprise a gesture-recognition interface, a speech-recognition interface, physical (as versus virtual) buttons, switches, scroll wheels, track pads, cameras, accelerometers, gyroscopes, proximity sensors, or the like, and so forth. And, as suggested by optional inclusion of the Nth input component 903, these teachings will accommodate any number of additional input components as desired.

The control circuit 901 can comprise a fixed-purpose hard-wired platform or can comprise a partially or wholly programmable platform as desired. This control circuit 901 is configured (for example, by corresponding programming as will be well understood by those skilled in the art) to carry out one or more of the features described herein. For example, programming executed by the control circuit 901 may cause the electronic device to:
use a three-dimensional display to present a virtual three-dimensional scene comprising a plurality of icons, including at least a first icon presented at a first depth of presentation and a second icon presented at a second depth of presentation, where the first and second depths of presentation are different from one another;
wherein the first icon is associated with the first input component of the user interface, and the second icon is associated with the second input component of the user interface; and
wherein the first input component provides for interaction with the first icon presented at the first depth of presentation, and the second input component provides for interaction with the second icon presented at a second depth of presentation. All of these architectural options regarding fixed-purpose designs as well as partial and full programmability are well known and understood in the art and require no further description here.

By one approach this electronic device 300 can further comprise a memory 902 that operably couples to the control circuit 901 (or, if desired, comprises a part thereof). This memory can serve to store content to be displayed by the three-dimensional display 301 (such as one or more of the icons contemplated herein). When the control circuit 901 comprises a component that is at least partially programmable, this memory 902 can also serve to store the instructions to be carried out by the control circuit 901.

Such an electronic device 300 may be comprised of a plurality of physically distinct elements as is suggested by the illustration shown in FIG. 9. It is also possible, however, to view this illustration as comprising a logical view, in which case one or more of these elements can be enabled and realized via a shared platform.

So configured, an electronic device having a three-dimensional display capability can simultaneously present, in a useful and intuitive manner, control-surface icons for control surfaces that are available on opposing sides of the device without requiring the device user to flip the device. Presuming the availability of the three-dimensional display itself, these teachings can be readily implemented in high cost-effective ways and often without requiring other dedicated physical components.

The present disclosure also shows a way of associating a tactilely-distinctive area such as a convex or concave shape formed on the back of a device with a similarly-shaped three-dimensional image. Thus when a shape is present on the back of the device, a corresponding conformal three-dimensional image (corresponding substantially to the shape and the depth location of the shape on the back of the device) may be presented. The similarity between the feel of the tactilely-distinctive shape and the corresponding image has the advantage of intuitively associating the image with the shape. For example, a rectangular bump out the back of the device can have an icon with a conforming shape associated therewith, such that an interaction with the rectangular bump activates an associated process. In other embodiments, the bump and corresponding image need not be related to the user interface and may contribute to the ornamental elements of the device.

It should be understood that the terms and expressions used herein have the ordinary technical meaning as is accorded to such terms and expressions by persons skilled in the technical field as set forth above except where different specific meanings have otherwise been set forth herein. Certain actions or steps may be described or depicted in a particular order of occurrence while those skilled in the art will understand that certain actions or steps may be performed in a variety of sequences without departing from the scope of the present invention as defined by the claims.

## Claims

1. A method in an electronic device (300) having a three-dimensional stereoscopic display (301) disposed on a first surface (300') of the electronic device (300) and a user interface (904) comprising a first physical input component (301) disposed on the first surface (300') of the electronic device and a second physical input component (401) disposed on a second surface (300") of the electronic device opposite to said first surface, the first physical input component having a first control surface, and the second physical input component being a three-dimensionally shaped physical input component having a second control surface below said three-dimensional stereoscopic display, the method comprising:
presenting (101, 102) via the three-dimensional stereoscopic display a plurality of icons (701, 702) associated with the user interface of the electronic device, the plurality of icons (701, 702) including a first icon (701) and a second icon (702), wherein the first icon (701) is presented at a first depth of presentation (601) that substantially coincides, or is substantially coplanar, with the first control surface of said first physical input component (301), and wherein the second icon (702) is presented at a second depth of presentation (602) that substantially coincides, or is substantially coplanar, with the second control surface of said second physical input component (401), and wherein the second depth of presentation (602) is different from the first depth of presentation (601);
associating the first icon with the first physical input component (301) and the second icon with the second physical input component (401);
whereby the first physical input component is configured to provide for interaction with the first icon presented at the first depth of presentation and not the second icon presented on the second depth of presentation, and the second physical input component is configured to provide for interaction with the second icon presented at the second depth of presentation and not the first icon presented at the first depth of presentation, and
wherein the three-dimensional stereoscopic display is configured to separately present a first image of the second icon (702) to a first eye of a viewer and a second image of the second icon (702) different from the first image to a second eye of the viewer to produce the second depth of presentation of the second icon (702).

2. The method of claim 1, wherein the first control surface of the first physical input component of the user interface comprises a first touch-sensitive surface, and the first touch-sensitive surface comprises the first surface of the electronic device.

3. The method of claim 2, wherein the second physical input component of the user interface comprises, at least in part, a keypad (401).

4. The method of claim 3, wherein the second icon presented at the second depth of presentation at least substantially coincides in space with at least one key of the keypad.

5. The method of claim 1, wherein the second physical input component of the user interface comprises, at least in part, at least one tactilely-distinctive area, wherein the second icon presented at the second depth of presentation at least substantially coincides in space with the at least one tactilely-distinctive area, and wherein the at least one tactilely-distinctive area has a three-dimensional shape and the second icon has a corresponding three-dimensional shape.

6. An apparatus (300) comprising:
a control circuit (901);
a three-dimensional stereoscopic display (301) operably coupled to the control circuit (901) and disposed on a first surface (300') of the apparatus (300); and
a user interface (904) having a first physical input component (301) disposed on the first surface (300') of the apparatus and a second physical input component (401) disposed on a second surface (300") of the electronic device (300) that is opposite the first surface, wherein the first physical input component has a first control surface, and the second physical input component is a three-dimensionally shaped physical input component having a second control surface below said three dimensional stereoscopic display;
wherein the control circuit is configured to use the three-dimensional stereoscopic display to present a virtual three-dimensional scene comprising a plurality of icons (701, 702) associated with the user interface (904) of the apparatus (300), the plurality of icons (701 702) including at least a first icon (701) and a second icon (702), wherein the first icon (701) is presented at a first depth of presentation (601) that substantially coincides, or is substantially coplanar, with the first control surface of the first physical input component (301) and the second icon (702) is presented at a second depth of presentation (602) that substantially coincides, or is substantially coplanar, with the second control surface of the second physical input component, and wherein the second depth of presentation is different from the first depth of presentation;
wherein the first icon is associated with the first physical input component of the user interface, and the second icon is associated with the second physical input component of the user interface;
wherein the first physical input component is configured to provide for interaction with the first icon presented at the first depth of presentation and not the second icon presented on the second depth of presentation, and the second physical input component is configured to provide for interaction with the second icon presented at a second depth of presentation and not the first icon presented at the first depth of presentation, and
wherein the three dimensional stereoscopic display is configured to separately present a first image of the second icon (702) to a first eye of a viewer and a second image of the second icon (702) different from the first image to a second eye of the viewer to produce the second depth of presentation of the second icon (702).

7. The apparatus of claim 6, wherein the apparatus comprises a mobile communications device.

8. The apparatus of claim 6, wherein the first physical input component is on a front side of the apparatus and the second physical input component is on a back side of the apparatus.

9. The apparatus of claim 8, wherein the first control surface of the first physical input component of the user interface comprises a first touch-sensitive surface, and the first icon presented at the first depth of presentation at least substantially coincides in space with the first touch-sensitive surface.

10. The apparatus of claim 6 wherein the second physical input component of the user interface comprises, at least in part, a keypad.

11. The apparatus of claim 10, wherein the keypad comprises, at least in part, at least one tactilely-distinctive area.

12. The apparatus of claim 11, wherein the second icon presented at the second depth of presentation at least substantially coincides with the at least one tactilely-distinctive area.

13. The apparatus of claim 12, wherein the second icon has a form factor that at least substantially coincides with a form factor for the at least one tactilely-distinctive area.

14. A computer readable storage medium (902) including computer readable program code, the program code comprising instruction which, when executed by the control circuit (901) of the apparatus (300) of any of claims 6-13, causes the apparatus to execute the method of any of claims 1 to 5.

## Patentansprüche

1. Verfahren in einer elektronischen Vorrichtung (300), die eine dreidimensionale stereoskopische Anzeige (301) aufweist, die auf einer ersten Oberfläche (300') der elektronischen Vorrichtung (300) angeordnet ist, und eine Benutzerschnittstelle (904), die eine erste physische Eingabekomponente (301) umfasst, die auf der ersten Oberfläche (300') der elektronischen Vorrichtung angeordnet ist, und eine zweite physische Eingabekomponente (401), die auf einer zweiten Oberfläche (300") der elektronischen Vorrichtung gegenüber der ersten Oberfläche angeordnet ist, wobei die erste physische Eingabekomponente eine erste Steueroberfläche aufweist und wobei die zweite physische Eingabekomponente eine dreidimensional geformte physische Eingabekomponente ist, die eine zweite Steueroberfläche unterhalb der dreidimensionalen stereoskopischen Anzeige aufweist, wobei das Verfahren Folgendes umfasst:
Darstellen (101, 102), über die dreidimensionale stereoskopische Anzeige, mehrerer Symbole (701, 702), die mit der Benutzerschnittstelle der elektronischen Vorrichtung verknüpft sind, wobei die mehreren Symbole (701, 702), ein erstes Symbol (701) und ein zweites Symbol (702) beinhalten, wobei das erste Symbol (701) in einer ersten Darstellungstiefe (601) dargestellt wird, die im Wesentlichen übereinstimmt, oder im Wesentlichen koplanar mit der ersten Steueroberfläche der ersten physischen Eingabekomponente (301) ist, und wobei das zweite Symbol (702) in einer zweiten Darstellungstiefe (602) dargestellt wird, die im Wesentlichen mit der zweiten Steueroberfläche der zweiten physischen Eingabekomponente (401) übereinstimmt oder im Wesentlichen koplanar ist, und wobei sich die zweite Darstellungstiefe (602) von der ersten Darstellungstiefe (601) unterscheidet;
Verknüpfen des ersten Symbols mit der ersten physischen Eingabekomponente (301) und des zweiten Symbols mit der zweiten physischen Eingabekomponente (401);
wodurch die erste physische Eingabekomponente konfiguriert ist, um eine Interaktion mit dem ersten Symbol bereitzustellen, das in der ersten Darstellungstiefe dargestellt wird, und nicht mit dem zweiten Symbol, das in der zweiten Darstellungstiefe dargestellt wird, und wobei die zweite physische Eingabekomponente konfiguriert ist, um eine Interaktion mit dem zweiten Symbol, das in der zweiten Darstellungstiefe dargestellt wird und nicht mit dem ersten Symbol, das in der ersten Darstellungstiefe dargestellt wird, bereitzustellen, und
wobei die dreidimensionale stereoskopische Anzeige konfiguriert ist, um separat ein erstes Bild des zweiten Symbols (702) an ein erstes Auge eines Betrachters und ein zweites Bild des zweiten Symbols (702), das sich von dem ersten Bild unterscheidet, an ein zweites Auge des Betrachters darzustellen, um die zweite Darstellungstiefe des zweiten Symbols (702) zu erzeugen.

2. Verfahren nach Anspruch 1, wobei die erste Steueroberfläche der ersten physischen Eingabekomponente der Benutzerschnittstelle eine erste berührungsempfindliche Oberfläche umfasst und die erste berührungsempfindliche Oberfläche die erste Oberfläche der elektronischen Vorrichtung umfasst.

3. Verfahren nach Anspruch 2, wobei die zweite physische Eingabekomponente der Benutzerschnittstelle wenigstens teilweise eine Tastatur (401) umfasst.

4. Verfahren nach Anspruch 3, wobei das zweite Symbol, das in der zweiten Darstellungstiefe dargestellt wird, in dem Raum wenigstens im Wesentlichen mit wenigstens einer Taste der Tastatur übereinstimmt.

5. Verfahren nach Anspruch 1, wobei die zweite physische Eingabekomponente der Benutzerschnittstelle wenigstens teilweise wenigstens einen taktil unterscheidbaren Bereich umfasst, wobei das zweite Symbol, das in der zweiten Darstellungstiefe dargestellt wird, in dem Raum wenigstens im Wesentlichen mit dem wenigstens einen taktil unterscheidbaren Bereich übereinstimmt, wobei der wenigstens eine taktil unterscheidbare Bereich eine dreidimensionale Form aufweist und das zweite Symbol eine entsprechende dreidimensionale Form aufweist.

6. Einrichtung (300), Folgendes umfassend:
eine Steuerschaltung (901);
eine dreidimensionale stereoskopische Anzeige (301), die mit der Steuerschaltung (901) wirkgekoppelt und auf einer ersten Oberfläche (300') der Einrichtung (300) angeordnet ist; und
eine Benutzerschnittstelle (904), die eine erste physische Eingabekomponente (301), die auf der ersten Oberfläche (300') der Einrichtung angeordnet ist, und eine zweite physische Eingabekomponente (401), die auf einer zweiten Oberfläche (300") der elektronischen Vorrichtung (300) gegenüber der ersten Oberfläche angeordnet ist, aufweist, wobei die erste physische Eingabekomponente eine erste Steueroberfläche aufweist und wobei die zweite physische Eingabekomponente eine dreidimensional geformte physische Eingabekomponente, die eine zweite Steueroberfläche unterhalb der dreidimensionalen stereoskopischen Anzeige aufweist, ist;
wobei die Steuerschaltung konfiguriert ist, um die dreidimensionale stereoskopische Anzeige zu verwenden, um eine virtuelle dreidimensionale Szene darzustellen, die mehrere Symbole (701, 702) umfasst, die mit der Benutzerschnittstelle (904) der Einrichtung (300) verknüpft sind, wobei die mehreren Symbole (701 702), wenigstens ein erstes Symbol (701) und ein zweites Symbol (702) beinhalten, wobei das erste Symbol (701) auf einer ersten Darstellungstiefe (601) dargestellt wird, die im Wesentlichen übereinstimmt, oder im Wesentlichen koplanar ist, mit der ersten Steueroberfläche der ersten physischen Eingabekomponente (301) und wobei das zweite Symbol (702) in einer zweiten Darstellungstiefe (602) dargestellt ist, die im Wesentlichen mit der zweiten Steuerung übereinstimmt oder im Wesentlichen koplanar mit der zweiten Steueroberfläche der zweiten physischen Eingabekomponente ist, und wobei sich die zweite Darstellungstiefe von der ersten Darstellungstiefe unterscheidet;
wobei das erste Symbol mit der ersten physischen Eingabekomponente der Benutzerschnittstelle verknüpft ist und das zweite Symbol mit der zweiten physischen Eingabekomponente der Benutzerschnittstelle verknüpft ist;
wobei die erste physische Eingabekomponente konfiguriert ist, um eine Interaktion mit dem ersten Symbol bereitzustellen, das in der ersten Darstellungstiefe dargestellt wird, und nicht mit dem zweiten Symbol, das in der zweiten Darstellungstiefe dargestellt wird, und wobei die zweite physische Eingabekomponente konfiguriert ist, um eine Interaktion mit dem zweiten Symbol in einer zweiten Darstellungstiefe und nicht mit dem ersten Symbol in der ersten Darstellungstiefe bereitzustellen, und
wobei die dreidimensionale stereoskopische Anzeige konfiguriert ist, um separat ein erstes Bild des zweiten Symbols (702) an ein erstes Auge eines Betrachters und ein zweites Bild des zweiten Symbols (702), das sich von dem ersten Bild unterscheidet, an ein zweites Auge des Betrachters darzustellen, um die zweite Darstellungstiefe des zweiten Symbols (702) zu erzeugen.

7. Einrichtung nach Anspruch 6, wobei die Einrichtung eine mobile Kommunikationsvorrichtung umfasst.

8. Einrichtung nach Anspruch 6, wobei sich die erste physische Eingabekomponente auf einer Vorderseite der Einrichtung befindet und die zweite physische Eingabekomponente sich auf einer Rückseite der Einrichtung befindet.

9. Einrichtung nach Anspruch 8, wobei die erste Steueroberfläche der ersten physischen Eingabekomponente der Benutzerschnittstelle eine erste berührungsempfindliche Oberfläche umfasst, und das erste Symbol, das in der ersten Darstellungstiefe dargestellt wird, in dem Raum wenigstens im Wesentlichen mit der ersten berührungsempfindlichen Oberfläche übereinstimmt.

10. Einrichtung nach Anspruch 6, wobei die zweite physische Eingabekomponente der Benutzerschnittstelle wenigstens teilweise eine Tastatur umfasst.

11. Einrichtung nach Anspruch 10, wobei die Tastatur wenigstens teilweise wenigstens einen taktil unterscheidbaren Bereich umfasst.

12. Einrichtung nach Anspruch 11, wobei das zweite Symbol, das in der zweiten Darstellungstiefe dargestellt wird, wenigstens im Wesentlichen mit dem wenigstens einen taktil unterscheidbaren Bereich übereinstimmt.

13. Einrichtung nach Anspruch 12, wobei das zweite Symbol einen Ausbildungsfaktor aufweist, der wenigstens im Wesentlichen mit einem Ausbildungsfaktor für den wenigstens einen taktil unterscheidbaren Bereich übereinstimmt.

14. Computerlesbares Speichermedium (902), das einen computerlesbaren Programmcode beinhaltet, wobei der Programmcode Anweisungen umfasst, die, wenn sie von der Steuerschaltung (901) der Einrichtung (300) nach einem der Ansprüche 6 bis 13 ausgeführt werden, bewirken, dass die Einrichtung das Verfahren nach einem der Ansprüche 1 bis 5 ausführt.

## Revendications

1. Procédé dans un dispositif électronique (300) doté d'un dispositif d'affichage stéréoscopique tridimensionnel (301) disposé sur une première surface (300') du dispositif électronique (300) et d'une interface utilisateur (904) comprenant un premier composant d'entrée physique (301) disposé sur la première surface (300') du dispositif électronique et un second composant d'entrée physique (401) disposé sur une seconde surface (300") du dispositif électronique opposée à ladite première surface, le premier composant d'entrée physique étant doté d'une première surface de commande, et le second composant d'entrée physique étant un composant d'entrée physique de forme tridimensionnelle doté d'une seconde surface de commande sous ledit dispositif d'affichage stéréoscopique tridimensionnel, le procédé comprenant :
la présentation (101, 102) par l'intermédiaire du dispositif d'affichage stéréoscopique tridimensionnel d'une pluralité d'icônes (701, 702) associées à l'interface utilisateur du dispositif électronique, la pluralité d'icônes (701, 702) comprenant une première icône (701) et une seconde icône (702), dans lequel la première icône (701) est présentée au niveau d'une première profondeur de présentation (601) qui coïncide sensiblement, ou est sensiblement coplanaire, avec la première surface de commande dudit premier composant d'entrée physique (301), et dans lequel la seconde icône (702) est présentée au niveau d'une seconde profondeur de présentation (602) qui coïncide sensiblement, ou est sensiblement coplanaire, avec la seconde surface de commande dudit second composant d'entrée physique (401), et dans lequel la seconde profondeur de présentation (602) est différente de la première profondeur de présentation (601) ;
l'association de la première icône au premier composant d'entrée physique (301) et de la seconde icône au second composant d'entrée physique (401) ;
moyennant quoi le premier composant d'entrée physique est configuré pour fournir une interaction avec la première icône présentée au niveau de la première profondeur de présentation et non la seconde icône présentée sur la seconde profondeur de présentation, et le second composant d'entrée physique est configuré pour fournir une interaction avec la seconde icône présentée à la seconde profondeur de présentation et non la première icône présentée à la première profondeur de présentation, et
dans lequel le dispositif d'affichage stéréoscopique tridimensionnel est configuré pour présenter séparément une première image de la seconde icône (702) à un premier œil d'un spectateur et une seconde image de la seconde icône (702) différente de la première image à un second œil du spectateur afin de produire la seconde profondeur de présentation de la seconde icône (702).

2. Procédé selon la revendication 1, dans lequel la première surface de commande du premier composant d'entrée physique de l'interface utilisateur comprend une première surface tactile, et la première surface tactile comprend la première surface du dispositif électronique.

3. Procédé selon la revendication 2, dans lequel le second composant d'entrée physique de l'interface utilisateur comprend, au moins en partie, un clavier (401).

4. Procédé selon la revendication 3, dans lequel la seconde icône présentée au niveau de la seconde profondeur de présentation coïncide au moins sensiblement dans l'espace avec au moins une touche du clavier.

5. Procédé selon la revendication 1, dans lequel le second composant d'entrée physique de l'interface utilisateur comprend, au moins en partie, au moins une zone à caractère tactile, dans lequel la seconde icône présentée au niveau de la seconde profondeur de présentation coïncide au moins sensiblement dans l'espace avec l'au moins une zone à distinction tactile, et dans lequel l'au moins une zone à distinction tactile est dotée d'une forme tridimensionnelle et la seconde icône est dotée d'une forme tridimensionnelle correspondante.

6. Appareil (300) comprenant :
un circuit de commande (901) ;
un dispositif d'affichage stéréoscopique tridimensionnel (301) couplé de manière fonctionnelle au circuit de commande (901) et disposé sur une première surface (300') de l'appareil (300) ; et
une interface utilisateur (904) dotée d'un premier composant d'entrée physique (301) disposé sur la première surface (300') de l'appareil et un second composant d'entrée physique (401) disposé sur une seconde surface (300") du dispositif électronique (300) qui est à l'opposé de la première surface, dans lequel le premier composant d'entrée physique est doté d'une première surface de commande, et le second composant d'entrée physique est un composant d'entrée physique de forme tridimensionnelle doté d'une seconde surface de commande sous ledit dispositif d'affichage stéréoscopique tridimensionnel ;
dans lequel le circuit de commande est configuré pour utiliser le dispositif d'affichage stéréoscopique tridimensionnel pour présenter une scène tridimensionnelle virtuelle comprenant une pluralité d'icônes (701, 702) associées à l'interface utilisateur (904) de l'appareil (300), la pluralité d'icônes (701, 702) comprenant au moins une première icône (701) et une seconde icône (702), la première icône (701) étant présentée lors d'une première profondeur de présentation (601) qui coïncide sensiblement, ou est sensiblement coplanaire, avec la première surface de commande du premier composant d'entrée physique (301) et la seconde icône (702) est présentée au niveau d'une seconde profondeur de présentation (602) qui coïncide sensiblement, ou est sensiblement coplanaire, avec la seconde surface de commande du second composant d'entrée physique, et dans lequel la seconde profondeur de présentation est différente de la première profondeur de présentation ;
dans lequel la première icône est associée au premier composant d'entrée physique de l'interface utilisateur, et la seconde icône est associée au second composant d'entrée physique de l'interface utilisateur ;
dans lequel le premier composant d'entrée physique est configuré pour fournir une interaction avec la première icône présentée au niveau de la première profondeur de présentation et non la seconde icône présentée sur la seconde profondeur de présentation, et le second composant d'entrée physique est configuré pour fournir une interaction avec la seconde icône présentée au niveau d'une seconde profondeur de présentation et non la première icône présentée au niveau de la première profondeur de présentation, et
dans lequel le dispositif d'affichage stéréoscopique tridimensionnel est configuré pour présenter séparément une première image de la seconde icône (702) à un premier œil d'un spectateur et une seconde image de la seconde icône (702) différente de la première image à un second œil du spectateur pour produire la seconde profondeur de présentation de la seconde icône (702).

7. Appareil selon la revendication 6, dans lequel l'appareil comprend un dispositif de communication mobile.

8. Appareil selon la revendication 6, dans lequel le premier composant d'entrée physique est sur un côté avant de l'appareil et le second composant d'entrée physique est sur un côté arrière de l'appareil.

9. Appareil selon la revendication 8, dans lequel la première surface de commande du premier composant d'entrée physique de l'interface utilisateur comprend une première surface tactile, et la première icône présentée au niveau de la première profondeur de présentation coïncide au moins sensiblement dans l'espace avec la première surface tactile.

10. Appareil selon la revendication 6, dans lequel le second composant d'entrée physique de l'interface utilisateur comprend, au moins en partie, un clavier.

11. Appareil selon la revendication 10, dans lequel le clavier comprend, au moins en partie, au moins une zone à distinction tactile.

12. Appareil selon la revendication 11, dans lequel la seconde icône présentée au niveau de la seconde profondeur de présentation coïncide au moins sensiblement avec l'au moins une zone à distinction tactile.

13. Appareil selon la revendication 12, dans lequel la seconde icône est dotée d'un facteur de forme qui coïncide au moins sensiblement avec un facteur de forme pour l'au moins une zone à distinction tactile.

14. Support de stockage lisible par ordinateur (902) comprenant un code de programme lisible par ordinateur, le code de programme comprenant une instruction qui, lorsqu'elle est exécutée par le circuit de commande (901) de l'appareil (300) selon l'une quelconque des revendications 6 à 13, amène l'appareil à exécuter le procédé selon l'une quelconque des revendications 1 à 5.
